# EUROPEAN PATENT APPLICATION

(11) **EP 2 860 373 A1**
(43) Date of publication of application: **15.04.2015**
(21) Application number: 12878290.1
(22) Date of filing: 06.06.2012
(51) Int. Cl.: F02B 47/10, F02D 21/04

(54) **WORKING GAS CIRCULATION TYPE ENGINE**

(71) Applicant: TOYOTA JIDOSHA KABUSHIKI KAISHA, Toyota-shi, Aichi-ken, 471-8571 (JP)
(72) Inventor: KATO, Akira, Toyota-shi, Aichi-ken, 471-8571 (JP)
(74) Representative: TBK
(86) International application number: PCT/JP2012/064532
(87) International publication number: WO 2013/183127

(57) **Abstract**

In a stratification operation, O₂ is injected from an oxygen injector 24 during valve opening of an intake valve 26. Therefore, the injected O₂ flows into a combustion chamber 14 immediately after the injection, and forms a layer having a constant spread in the combustion chamber 14 (A in Figure 5). Meanwhile, the working gas in the combustion chamber 14 forms such a layer as to cover the O₂ layer on a wall surface of the combustion chamber 14 in conjunction with formation of the O₂ layer (B in Figure 5). In other words, in the combustion chamber 14, an inner layer with a high O₂ concentration (A in Figure 5) and an outer layer with a high working gas concentration (B in Figure 5) are respectively formed.

## Description

### Technical Field

The present invention relates to a working gas circulation type engine, and relates to a working gas circulation type engine that circulates a working gas in a closed cycle or a semi-closed cycle.

### Background Art

There has been conventionally known a working gas circulation type engine that circulates a working gas in a closed cycle or a semi-closed cycle. A working gas circulation type engine combusts fuel in a combustion chamber, and causes the working gas that expands with the combustion to flow to a circulation path and reintroduces the working gas to a combustion chamber, in a configuration including the circulation path and the combustion chamber that are filled with the working gas, and means for supplying the fuel to the combustion chamber. The working gas circulation type engine like this is also called a closed cycle engine.

As the working gas circulation type engine, for example, Patent Literature 1 discloses a hydrogen argon closed cycle engine that uses hydrogen (H₂) for fuel and argon (Ar) for the working gas respectively, and circulates Ar by a reaction of oxygen (O₂) and H₂ that are supplied to the combustion chamber. The engine includes a condenser that cools and liquefies water vapor that is generated by the above described reaction, in a circulation path. The water vapor in the working gas is one of the causes that reduce the thermal efficiency of an engine. In this regard, according to the engine of Patent Literature 1, the water vapor in the working gas can be separated and removed in the condenser. Further, in the engine of Patent Literature 1, a tank that stores the condensed water generated in the condenser is provided, and pressure control that increases the internal pressure of the tank to be higher than an external pressure is executed when the condensed water in the tank is discharged to an outside. Consequently, according to the engine of Patent Literature 1, the condensed water that is generated in the condenser can be properly discharged to the outside.

### Citation List

### Patent Literature

Patent Literature 1: Japanese Patent Laid-Open No. 2011-196236

### Summary of Invention

As described above, presence of the water vapor in the working gas is the cause of reduction of the engine thermal efficiency. In other words, if the water vapor amount in the working gas is small, the engine thermal efficiency is improved. Accordingly, increasing the generation amount of condensed water in the condenser is important in improving the engine thermal efficiency, and fuel efficiency in addition. As the means for increasing the generation amount of condensed water, reduction in temperature of cooling water is cited. For example, in Patent Literature 1 described above, the condenser is connected to the radiator, and cooling water flows between the condenser and the radiator. Therefore, if the heat radiation amount in the radiator is increased, reduction in temperature of the cooling water can be achieved. However, in order to increase the radiation heat amount in the radiator, upsizing the radiator and the like are necessary, which is likely to lead to increase in cost. Further, when loading of the working gas circulation type engine on a vehicle or the like is considered, the loading flexibility is likely to be reduced.

The present invention is made in the light of the aforementioned problems. Namely, the present invention has an object to provide a working gas circulation type engine that can increase a generation amount of condensed water in a condenser.

### Means for Solving the Problem

To achieve the above described object, a first aspect of the present invention is a working gas circulation type engine, comprising:
a circulation path in which a working gas circulates;
a combustion chamber that is provided in the circulation path, allows a reaction that generates water vapor by combustion of an oxidant and fuel to proceed, and allows the working gas which is taken in from the circulation path to expand in conjunction with the reaction to discharge the working gas to the circulation path;
stratification operation executing means for executing a stratification operation of forming a layer of a reactant and a layer of the working gas in the combustion chamber; and
water vapor separating and removing means that is provided in the circulation path, and separates and removes water vapor from the working gas which flows in the circulation path.

To achieve the above described object, a second aspect of the present invention is a working gas circulation type engine, comprising:
a circulation path in which a working gas circulates;
a combustion chamber that is provided in the circulation path, allows a reaction that generates water vapor by combustion of an oxidant and fuel to proceed, and allows the working gas which is taken in from the circulation path to expand in conjunction with the reaction to discharge the working gas to the circulation path;
stratification operation executing means for executing a stratification operation of forming an inner layer comprising a reactant and an outer layer comprising the working gas in the combustion chamber; and
water vapor separating and removing means that is provided in the circulation path, and separates and removes water vapor from the working gas that flows in the circulation path.

A third aspect of the present invention is the working gas circulation type engine according to the second aspect,
wherein the stratification operation executing means comprises:
inlet port opening and closing means for opening and closing an inlet port of the combustion chamber;
reactant supply means provided in the circulation path in a vicinity of the inlet port and for supplying the reactant to the combustion chamber; and
control means for controlling the inlet port opening and closing means and the reactant supply means so that the reactant flows in a vicinity of a center of the combustion chamber during opening of the inlet port.

A fourth aspect of the present invention is the working gas circulation type engine according to the second or the third aspect,
wherein the water vapor separating and removing means comprises
condensed water generating means for cooling and liquefying water vapor,
condensed water storing means for storing condensed water generated in the condensed water generating means, and
condensed water discharging means for discharging condensed water in the condensed water storing means to an outside,
the working gas circulation type engine, further comprising:
pressure comparing means for comparing a pressure in the circulation path and an external pressure; and
water drain prohibiting means for prohibiting water drain from the condensed water discharging means when the pressure in the circulation path is lower than the external pressure.

A fifth aspect of the present invention is the working gas circulation type engine according to any one of the second aspect to the fourth aspect,
wherein the water vapor separating and removing means comprises
condensed water generating means for cooling and liquefying water vapor,
condensed water storing means for storing condensed water generated in the condensed water generating means, and
condensed water discharging means for discharging the condensed water in the condensed water storing means to an outside,
the working gas circulation type engine, further comprising:
homogenization operation executing means for executing a homogenization operation of forming a homogenized mixture gas of the reactant and the working gas in the combustion chamber;
pressure comparing means for comparing a pressure in the circulation path and an external pressure; and
operation switching means for executing the stratification operation by the stratifying means when the pressure in the circulation path is higher than the external pressure, and executing a homogenization operation by the homogenizing means when the pressure in the circulation path is the external pressure or lower.

A sixth aspect of the present invention is the working gas circulation type engine according to any one of the second aspect to the fifth aspects, further comprising:
a high concentration water vapor channel that is independently formed in the circulation path between the water vapor separating and removing means and the combustion chamber, and has an end thereof at a combustion chamber side opened toward a center portion of an exhaust port of the combustion chamber.

A seventh aspect of the present invention is the working gas circulation type engine according to any one of the second aspect to the sixth aspect,
wherein the water vapor separating and removing means comprises
first condensed water generating means for cooling and liquefying water vapor by a refrigerant, and
second condensed water generating means for cooling and liquefying water vapor by a refrigerant with a temperature higher than the refrigerant for use in the first condensed water generating means, and
wherein the first condensed water generating means is connected to a high concentration water vapor channel that is independently formed in the circulation path between the water vapor separating and removing means and the combustion chamber, and has an end thereof at a combustion chamber side opened toward a center portion of an exhaust port of the combustion chamber, and
the second condensed water generating means is connected to a low concentration water vapor channel as a channel except for the high concentration water vapor channel, in the circulation path between the water vapor separating and removing means and the combustion chamber.

An eighth aspect of the present invention is the working gas circulation type engine according to any one of the third aspect to the seventh aspect,

wherein in the circulation path in a vicinity of the inlet port, a demarcation channel that demarcates a part thereof is formed, and
the reactant supply means is provided in the demarcation channel.

A ninth aspect of the present invention is the working gas circulation type engine according to any one of the third aspect to the eighth aspect,
wherein the circulation path branches into a first path and a second path in a vicinity of the inlet port, and
the reactant supply means is provided in the first path, and the second path is configured to be able to form a swirl flow in a working gas flow that flows in the combustion chamber.

A tenth aspect of the present invention is the working gas circulation type engine according to the ninth aspect, further comprising:
working gas amount regulating means provided at an upstream side from the reactant supply means in the first path, and capable of regulating an amount of the working gas which flows in the first path.

An eleventh aspect of the present invention is the working gas circulation type engine according to the tenth aspect, further comprising:
working gas amount controlling means for controlling the working gas amount regulating means so that the amount of the working gas increases in response to an engine speed when the engine speed exceeds a set value.

A twelfth aspect of the present invention is the working gas circulation type engine according to any one of the third aspect to the eleventh aspect,
wherein the reactant supply means comprises an injection port for injecting a reactant, and
the reactant supply means is provided so that the injection port points toward a center of the combustion chamber.

### Advantageous Effect of Invention

According to the first invention, by executing the stratification operation, a layer of the reactant and a layer of the working gas can be formed in the combustion chamber before reaction. Therefore, in the combustion chamber after the reaction, a layer with a high concentration of generated water vapor, and a layer with a high concentration of the working gas can be formed. Here, the amount of water vapor that can be separated and removed by the water vapor separating and removing means becomes larger as the pressure difference between the water vapor partial pressure in the working gas which is introduced therein and a saturated water vapor partial pressure is larger. Further, the water vapor partial pressure in the working gas becomes higher in accordance with increase in the water vapor concentration. In this regard, according to the first invention, the layer with a high water vapor concentration can be formed, and therefore, the working gas with a high water vapor partial pressure can be discharged to the circulation path. Accordingly, in the water vapor separating and removing means, a larger amount of water vapor can be separated and removed.

According to the second invention, by executing the stratification operation, the inner layer formed from the reactant and the outer layer formed from the working gas can be formed in the combustion chamber before reaction. Therefore, in the combustion chamber after the reaction, the inner layer with a high concentration of the generated water vapor and the outer layer with a high concentration of the working gas can be formed. Accordingly, similarly to the above described first invention, a larger amount of water vapor can be separated and removed in the water vapor separating and removing means. Further, according to the second invention, the reaction can be caused to proceed in the inner side of the combustion chamber. In other words, reaction in the vicinity of the wall surface of the combustion chamber can be restrained from proceeding. Accordingly, cooling loss from the wall surface of the combustion chamber can be restrained, and therefore, the thermal efficiency can be improved.

According to the third invention, in the case in which the reactant supply means is provided in the circulation path in a vicinity of the inlet port, the inner layer formed from the reactant can be favorably formed in the combustion chamber before reaction.

According to the fourth invention, when the pressure in the circulation path is lower than the external pressure, water drain from the condensed water discharging means can be prohibited. Accordingly, when the pressure in the circulation path is lower than the external pressure, external air can be favorably restrained from flowing into the condensed water discharging means.

According to the fifth invention, when the pressure in the circulation path is higher than the external pressure, the stratification operation is executed, and when the pressure in the circulation path is the external pressure or lower, the homogenization operation can be executed. If the homogenization operation is executed, the homogenized mixture gas of the reactant and the working gas can be formed in the combustion chamber before the reaction. Therefore, as compared with the case of executing the stratification operation, the working gas can be warmed in a shorter time period. Consequently, according to the fifth invention, the working gas can be warmed in a short time period when the pressure in the circulation path is lower than the external pressure.

According to the sixth invention, the high concentration water vapor channel is included, and therefore, the inner layer with a high water vapor concentration, which is formed in the combustion chamber after the reaction is passed to the high concentration water vapor channel, and can be reliably introduced into the water vapor separating and removing means. Accordingly, after the working gas is discharged from the combustion chamber, and before the working gas reaches the water vapor separating and removing means, the water vapor partial pressure in the working gas can be favorably restrained from reducing.

As described above, the amount of the water vapor that can be separated and removed by the water vapor separating and removing means becomes larger as the above described pressure difference becomes larger. Further, the amount of the water vapor that can be separated and removed by the water vapor separating and removing means becomes larger as the temperature of the refrigerant in use becomes lower. In this regard, according to the seventh invention, the layer with a high water vapor concentration is passed to the high concentration water vapor channel and can be introduced into the first condensed water generating means. Accordingly, the working gas with a high water vapor partial pressure is introduced into the first condensed water generating means, and a sufficient amount of water vapor can be separated and removed. Further, according to the seventh invention, the layer with a lower water vapor concentration is passed to the low concentration water vapor channel, and can be introduced into the second condensed water generating means using the refrigerant with a temperature higher than that of the refrigerant for use in the first condensed water generating means. Accordingly, the working gas with a low water vapor partial pressure is introduced into the second condensed water generating means, and a minimum necessary amount of water vapor can be separated and removed.

According to the eighth invention, the above described reactant supply means is provided in the above described demarcation channel, and therefore, the working gas and the reactant can be favorably restrained from mixing with each other before flowing into the combustion chamber.

According to the ninth invention, a swirl flow can be formed in the working gas flow which passes in the second path, and therefore, the outer layer formed from the working gas can be favorably formed in the combustion chamber before reaction.

According to the tenth invention, the amount of the working gas that flows in the first path can be regulated by the working gas amount regulating means, and therefore, only the reactant can be caused to flow in the first path. Accordingly, the working gas and the reactant can be favorably restrained from mixing with each other before flowing into the combustion engine.

When only the reactant is caused to flow in the first path, the amount of the working gas flowing in the first path is made zero by the working gas amount regulating means. Therefore, the pump loss occurs, and the pump loss increases as the engine speed becomes higher. In this regard, according to the eleventh invention, when the engine speed exceeds a set value, the above described working gas amount regulating means can be controlled so that the working gas amount increases in response to the engine speed. Therefore, increase in the above described pump loss can be restrained.

According to the twelfth invention, the injection port of the reactant supply means is provided to point to the center of the above described combustion chamber, and therefore, the inner layer formed from the reactant can be favorably formed in the combustion chamber before reaction.

### Brief Description of Drawings

Figure 1 is a diagram showing a configuration of a working gas circulation type engine of embodiment 1.
Figure 2 is a diagram showing specific heat ratios of various gases.
Figure 3 is a diagram showing a relationship of a compression ratio ε and thermal efficiency ηth.
Figure 4 is a saturated water vapor partial pressure curve.
Figure 5 is a diagram for explaining the stratification operation.
Figure 6 is a diagram for describing a feature part of embodiment 2.
Figure 7 is a diagram for describing a feature part of embodiment 3.
Figure 8 is a diagram for describing a feature part of embodiment 4.
Figure 9 is a diagram explaining one example of the SCV opening degree control that is executed by the ECU 50.
Figure 10 is a diagram for describing a feature part of embodiment 6.
Figure 11 is a diagram for describing a feature part of embodiment 7.
Figure 12 is a diagram for showing a configuration of a working gas circulation type engine of embodiment 8.
Figure 13 is a diagram for describing the high concentration water vapor channel 40 in Figure 12.
Figure 14 is a diagram for describing a feature part of embodiment 9.
Figure 15 is a diagram for describing a feature part of embodiment 10.
Figure 16 is a diagram showing a configuration of a working gas circulation type engine of embodiment 11.
Figure 17 is a flowchart of an operation switch control routine that is executed by the ECU 50 in embodiment 11.

### Description of Embodiments

### Embodiment 1

### [Explanation of engine configuration]

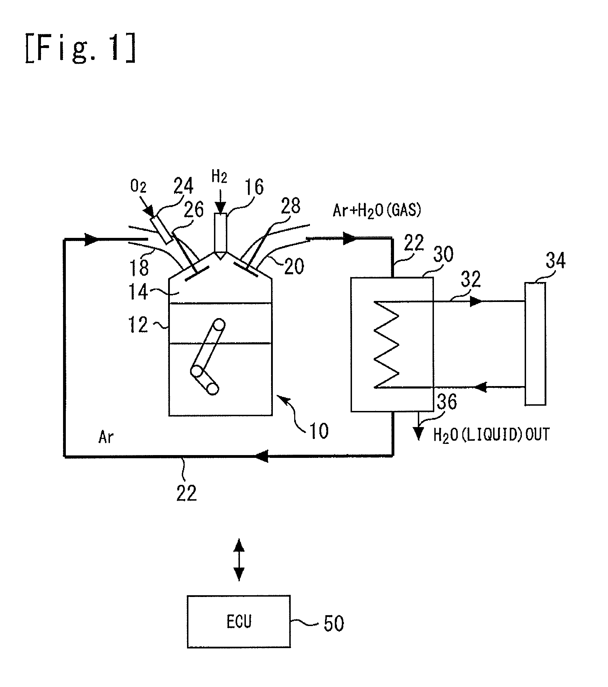

First, embodiment 1 of the present invention will be described with reference to Figure 1 to Figure 5. Figure 1 is a diagram showing a configuration of a working gas circulation type engine of embodiment 1. As shown in Figure 1, the working gas circulation type engine of the present embodiment includes an engine main body 10. The engine main body 10 is a so-called four stroke engine, and has at least one cylinder. In the cylinder, a combustion chamber 14 is defined by a piston 12. Further, the cylinder is provided with a hydrogen injector 16 that injects high-pressure H₂ toward the combustion chamber 14.

Further, the working gas circulation type engine of the present embodiment includes an intake port 18 and an exhaust port 20 that communicate with the combustion chamber 14. Between the intake port 18 and the exhaust port 20, a connection passage 22 that connects the intake port 18 and the exhaust port 20. The intake port 18 is provided with an oxygen injector 24 that injects high-pressure O₂, and an intake valve 26 that opens/closes an inlet port of the combustion chamber 14. The exhaust port 20 is provided with an exhaust valve 28 that opens/closes an exhaust port of the combustion chamber 14.

Further, the working gas circulation type engine of the present embodiment includes a condenser 30. The condenser 30 is provided halfway through the connection passage 22, and cools and liquefies water vapor in the working gas that flows in the connection passage 22. The condenser 30 includes a cooling water channel 32 for passing the cooling water through an inside thereof. The cooling water channel 32 is connected to a radiator 34, and the cooling water is cooled by the radiator 34. Further, the condenser 30 includes an exhaust path 36 that discharges condensed water generated in the condenser 30 to an outside.

Further, the working gas circulation type engine of the present embodiment includes an ECU 50 as a control device. The ECU 50 is connected to the hydrogen injector 16, the oxygen injector 24, the intake valve 26, the exhaust valve 28 and the like. The ECU 50 executes a stratification operation that will be described later and the like by driving the respective actuators while detecting operation information of the engine main body 10 by a sensor system.

### [Feature of embodiment 1]

In the present embodiment, a working gas is filled in the combustion chamber 14, the intake port 18, the exhaust port 20 and the connection passage 22. A flow of the working gas will be described in combination with operations of the piston 12, the intake valve 26 and the exhaust valve 28. The working gas in the intake port 18 flows into the combustion chamber 14 in conjunction with a descend of the piston 12 while the inlet port of the combustion chamber 14 is opened (namely, during valve opening of the intake valve 26) (an intake stroke). In the intake stroke, O₂ from the oxygen injector 24 also flows into the combustion chamber 14, in addition to the working gas. The piston 12 ascends after reaching a bottom dead center thereof. Thereupon, the working gas and O₂ that flow into the combustion chamber 14 are compressed with the working gas which is already filled in the combustion chamber 14 (a compression stroke). Thereafter, H₂ is injected from the hydrogen injector 16 in a vicinity of a top dead center, and the H₂ reacts with O₂. By the reaction heat, the working gas in the combustion chamber 14 expands to press the piston 12 downward (a combustion stroke). The piston 12 ascends again after reaching the bottom dead center thereof. On this occasion, if the exhaust valve 28 is operated to open the exhaust port of the combustion chamber 14, the working gas in the combustion chamber 14 is discharged to the exhaust port 20 (an exhaust stroke). The discharged working gas flows through the exhaust port 20 and the connection passage 22 to reach the intake port 18.

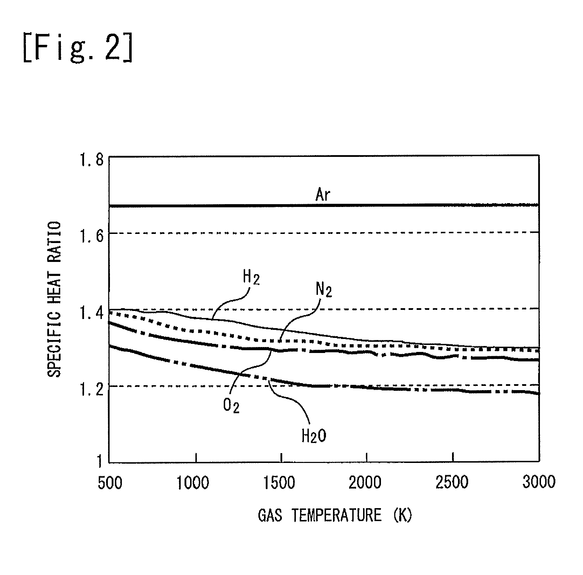

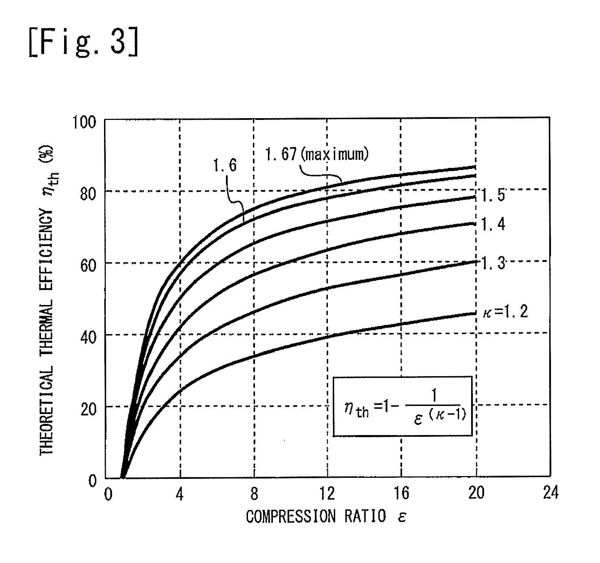

In the present embodiment, Ar is used as the working gas. Use of Ar can improve thermal efficiency. The reason thereof will be described with reference to Figure 2 and Figure 3. Figure 2 is a diagram showing specific heat ratios of various gases. As shown in Figure 2, Ar has a higher specific heat ratio than H₂, N₂, O₂ and H₂O. Further, Figure 3 is a diagram showing a relationship of a compression ratio ε and thermal efficiency ηth. As shown in Figure 3, under a condition that the compression ratio ε is constant, the thermal efficiency ηth becomes higher as the specific heat ratio κ becomes higher. Accordingly, if Ar with the high specific ratio κ is used as the working gas, the thermal efficiency can be improved. Note that with any gas that has a specific heat ratio higher than air and is inert to the reaction in the combustion chamber, the operational effect similar to the operational effect with Ar can be obtained. Therefore, the inert gas also can be used in place of Ar or together with Ar.

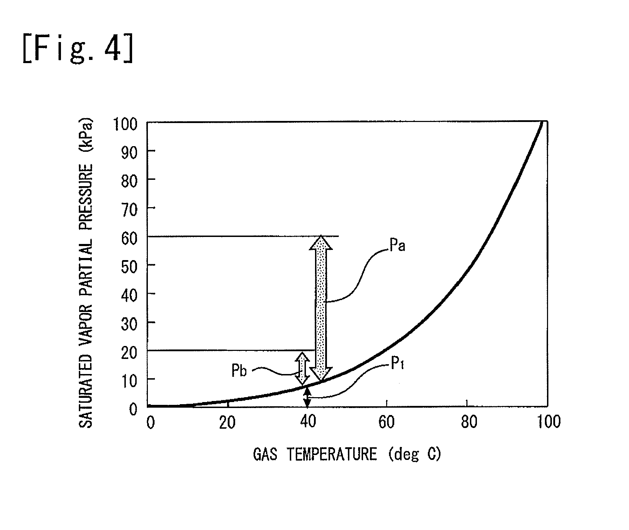

Incidentally, the working gas that is discharged from the combustion chamber 14 contains water vapor generated by the reaction of H₂ and O₂. The water vapor is condensed and liquefied in the condenser 30. However, condensation and liquefaction in the condenser 30 are limited. Therefore, in the condenser 30, the water vapor in the working gas cannot be completely separated and removed. The reason thereof will be described with reference to Figure 4. Figure 4 is a saturated water vapor partial pressure curve. As shown in Figure 4, when a water vapor partial pressure in the gas, for example, at 40°C is higher than a saturated vapor partial pressure, water vapor corresponding to pressure differences thereof (Pa, Pb) is liquefied. In other words, water vapor corresponding to saturated water vapor partial pressure (P₁) always remains in the gas. The remaining phenomenon also applies to the inside of the condenser 30. Accordingly, a constant amount of water vapor corresponding to a gas temperature flows to a downstream side from the condenser 30.

Note, however, attention should be paid to the point that the pressure difference in Figure 4 is Pa>Pb. As described above, in the condenser 30, the water vapor corresponding to the above described pressure difference can be liquefied. Namely, if the above described pressure difference is larger, a larger amount of condensed water can be generated. By focusing on this point, in the present embodiment, a stratification operation of making the working gas concentration in the combustion chamber 14 in the compression stroke higher in the vicinity of a wall surface thereof than in a center portion thereof is executed.

### [Stratification operation]

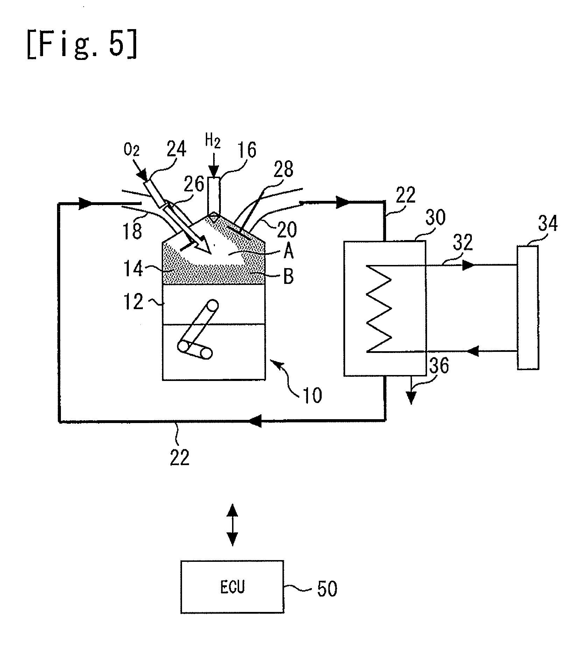

Figure 5 is a diagram for explaining the stratification operation. In the stratification operation, during valve opening of the intake valve 26, O₂ is injected from the oxygen injector 24. Therefore, the injected O₂ flows into the combustion chamber 14 immediately after the injection, and forms a layer having a constant spread in the combustion chamber 14 (A in Figure 5). On the other hand, in conjunction with formation of the O₂ layer, the working gas in the combustion chamber 14 forms such a layer as to cover the O₂ layer in the wall surface of the combustion chamber 14 (B in Figure 5). Namely, in the combustion chamber 14, an inner layer (A in Figure 5) with a high O₂ concentration, and an outer layer (B in Figure 5) with a high working gas concentration are respectively formed.

The inner layer which is formed in this manner also keeps a stratified state in the above described compression stroke. Therefore, the water vapor that is generated in the subsequent combustion stroke also forms a layer having a constant spread similarly to O₂. Namely, in the combustion chamber 14 in the combustion stroke, an inner layer with a high water vapor concentration and an outer layer with a low water vapor concentration are formed. The working gas including the inner layer formed in this manner has a high water vapor partial pressure in the gas. Therefore, if the working gas in this state is introduced into the condenser 30, the above described pressure difference can be made large, and therefore, a larger amount of condensed water can be generated in the condenser 30.

Here, as comparison with the stratification operation, a homogenization operation will be described. A homogenization operation is control that homogenizes the working gas concentration distribution in the combustion chamber 14 during the compression stroke, and is control that is different from the above described stratification operation. In the homogenization operation, O₂ injection form the oxygen injector 24 is started while the inlet port of the combustion chamber 14 is closed (namely, before valve opening of the intake valve 26). Thereupon, the injected O₂ temporarily stays in the intake port 18. The staying O₂ mixes with the working gas and is brought into a homogenized state, flows into the combustion chamber 14 in conjunction with valve opening of the intake valve 26, and is compressed. Namely, the O₂ concentration distribution in the combustion chamber 14 becomes substantially uniform. Therefore, the concentration distribution of the water vapor generated in the combustion stroke also becomes substantially uniform. Therefore, even if the working gas in this state is introduced into the condenser 30, the amount of the condensed water that is generated is small.

As above, according to the present embodiment, by executing the stratification operation, the working gas with a high water vapor partial pressure in the gas can be introduced into the condenser 30. Therefore, the pressure difference between the water vapor partial pressure in the working gas discharged from the combustion chamber 14 and the saturated water vapor partial pressure can be made large. Accordingly, in the condenser 30, a larger amount of condensed water can be generated. Further, if the stratification operation is executed, the working gas layer with a high working gas concentration can be formed in the vicinity of the wall surface of the combustion chamber 14 on the occasion of the combustion stroke. Accordingly, a reaction of H₂ and O₂ in the vicinity of the wall surface can be restrained, and cooling loss can be reduced. Therefore, the thermal efficiency also can be significantly improved.

Note that while in the above described embodiment 1, the hydrogen injector 16 is provided in the cylinder of the engine main body 10, and the oxygen injector 24 is provided in the intake port 18, the disposition spots of these injectors can be changed. More specifically, the installation spot of the hydrogen injector 16 and the installation spot of the oxygen injector 24 may be replaced. Further, the installation spots of both the injectors may be in the intake port 18, or may be in the cylinder of the engine main body 10.

However, when the installation spots of both the injectors are replaced with each other, H₂ needs to be injected from the hydrogen injector 16 during valve opening of the intake valve 26 in the above described stratification operation. Further, when the installation sports of both the injectors are both set at the intake port 18, H₂ and O₂ need to be injected from the both injectors during valve opening of the intake valve 26 in the above described stratification operation. When the installation spots of both the injectors are both set at the cylinder of the engine main body 10, H₂ and O₂ need to be injected during a time period until the combustion stroke from the intake stroke, in the above described stratification operation.

Namely, any combination of injector disposition which can form H₂ and O₂ layers and the working gas layer separately, in the combustion chamber 14 immediately before the combustion stroke, and the stratification operation corresponding to the injector disposition, can be applied as a modification of embodiment 1 described above.

Note that in embodiment 1 described above, the intake port 18, the exhaust port 20 and the connection passage 22 correspond to the "circulation path" in each of the above described first and second inventions, the combustion chamber 14 corresponds to the "combustion chamber" in each of the above described first and second inventions, the condenser 30 corresponds to the "water vapor separating and removing means" in each of the above described first and second inventions, respectively.

Further, in embodiment 1 described above, the ECU 50 executes the stratification operation, whereby the "stratification operation execution means" in each of the above described first and second inventions is realized.

Further, in embodiment 1 described above, the intake valve 26 corresponds to the "inlet port opening and closing means" in the above describe third invention, the oxygen injector 24 corresponds the "reactant supply means" in the above described third invention, and the ECU 50 corresponds to the "control means" in the above described third invention, respectively.

### Embodiment 2

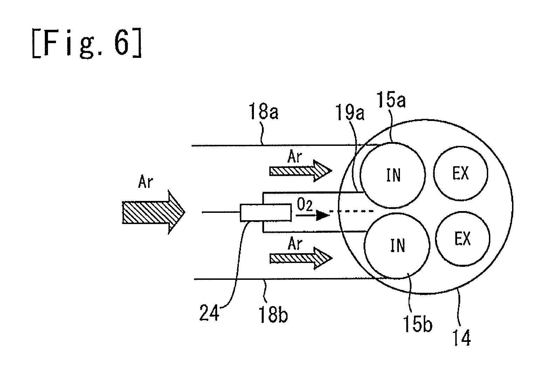

Next, embodiment 2 of the present invention will be described with reference to Figure 6. The present embodiment differs from embodiment 1 described above in that the disposition spot of the oxygen injector 24 is specified. Namely, a configuration of an engine, a basic flow of the working gas, and a stratification operation are common to the engine of embodiment 1 described above. Therefore, hereinafter, the above described difference will be mainly described, and explanation of the points common to embodiment 1 described above will be simplified or omitted.

### [Feature of embodiment 2]

Figure 6 is a diagram for describing a feature part of embodiment 2. As shown in Figure 6, the intake port 18 branches at an upstream side of the combustion chamber 14. More specifically, the intake port 18 is configured by an intake port 18a branching to an inlet port 14a side of the combustion chamber 14, and an intake port 18b branching to an inlet port 14b side of the combustion chamber. Further, a demarcation passage 19a that partially demarcates parts of the intake ports 18a and 18b is formed halfway between the intake ports 18a and 18b. The demarcation passage 19a is provided with the oxygen injector 24.

In the present embodiment, the intake port 18 is configured as described above, and therefore, a working gas channel and an O₂ channel in the intake port 18 can be configured separately. Namely, the working gas can be caused to flow into the intake ports 18a and 18b and O₂ from the oxygen injector 24 can be caused to flow into the demarcation passage 19a to be caused to flow into the combustion chamber 14. Therefore, in the intake port 18, the working gas and O₂ can be reliably prevented from mixing with each other. Further, in the present embodiment, the demarcation passage 19a is formed as described above, and therefore, with respect to O₂ that flows into the combustion chamber 14, a layer having a constant spread can be formed in a center portion thereof. Consequently, according to the present embodiment, an inner layer with a high O₂ concentration can be reliably formed in the center portion of the combustion chamber 14. Therefore, an effect similar to the effect of embodiment 1 described above can be reliably obtained.

Note that in embodiment 2 described above, the demarcation passage 19a corresponds to the "demarcation channel" in the above described eighth invention.

### Embodiment 3

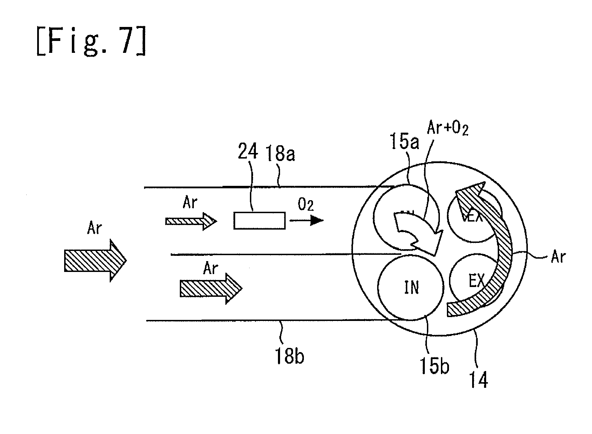

Next, embodiment 3 of the present invention will be described with reference to Figure 7. The present embodiment differs from embodiment 1 described above in that the disposition spot of the oxygen injector 24 is specified, and the intake port 18b is configured by a helical port. Namely, a configuration of an engine, a basic flow of the working gas, and a stratification operation are common to the engine of embodiment 1 described above. Therefore, hereinafter, the above described differences will be mainly described, and explanation of the points common to embodiment 1 described above will be simplified or omitted.

### [Feature of embodiment 3]

Figure 7 is a diagram for describing a feature part of embodiment 3. As shown in Figure 7, the intake port 18 is configured by the intake port 18a branching to the inlet port 14a side, and the intake port 18b branching to the inlet port 14b side. The intake port 18b is a so-called helical port that is formed into a helical shape so as to generate a swirl flow in the combustion chamber 14. In contrast with this, the intake port 18a is a so-called straight port. The intake port 18a is provided with the oxygen injector 24.

The working gas that flows in the connection passage 22 flows into the combustion chamber 14 via the intake ports 18a and 18b. Note that since in the present embodiment, the intake port 18b is configured by a helical port, the working gas passing through the intake port 18b forms a swirl flow to flow into the combustion chamber 14, and forms an outer layer with a high working gas concentration along the wall surface thereof. Meanwhile, an O₂-containing working gas passing through the intake port 18a forms an inner layer having a constant spread in the center portion in the combustion chamber 14, due to formation of the outer layer. Consequently, according to the present embodiment, the inner layer with a high O₂ concentration can be formed in the center portion of the combustion chamber 14. Therefore, an effect similar to the effect of embodiment 1 described above can be obtained.

### Embodiment 4

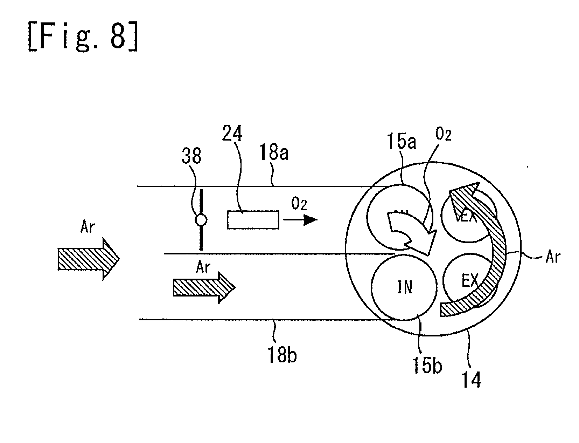

Next, embodiment 4 of the present invention will be described with reference to Figure 8. The present embodiment differs from embodiment 3 described above in that a swirl control valve (SCV) is provided in the intake port 18a. Therefore, hereinafter, the above described difference will be mainly described, and explanation of the points common to embodiment 3 described above will be simplified or omitted.

### [Feature of embodiment 4]

Figure 8 is a diagram for describing a feature part of embodiment 4. As shown in Figure 8, the intake port 18 is configured by the intake port 18a and the intake port 18b. The intake port 18b is a so-called helical port. The intake port 18a is a so-called straight port. The intake port 18a is provided with the oxygen injector 24. An SCV 38 is provided in the intake port 18a at an upstream side from the oxygen injector 24. The SCV 38 is connected to the ECU 50. An opening degree of the SCV 38 is controlled by the ECU 50, whereby the amount of the working gas that flows into the combustion chamber 14 via the intake port 18a can be regulated.

In Figure 8, the SCV 38 is in a closed state (namely, the opening degree of the SCV 38 is zero). When the SCV 38 is in a closed state, the working gas that flows in the connection passage 22 flows in only the intake port 18b. The working gas that flows in the intake port 18b forms a strong swirl flow to flow into the combustion chamber 14, and forms an outer layer with a high working gas concentration, to be along the wall surface. In contrast with this, in the intake port 18a, only O₂ from the oxygen injector 24 flows. Therefore, an O₂ concentration in the inner layer which is formed in the combustion chamber 14 can be made extremely high. Consequently, according to the present embodiment, the above described pressure difference can be made larger as compared with embodiment 3 described above, and therefore, a larger amount of condensed water can be generated in the condenser 30.

Note that in embodiment 4 described above, the SCV 38 corresponds to the "working gas amount regulating means" in the above described tenth invention.

### Embodiment 5

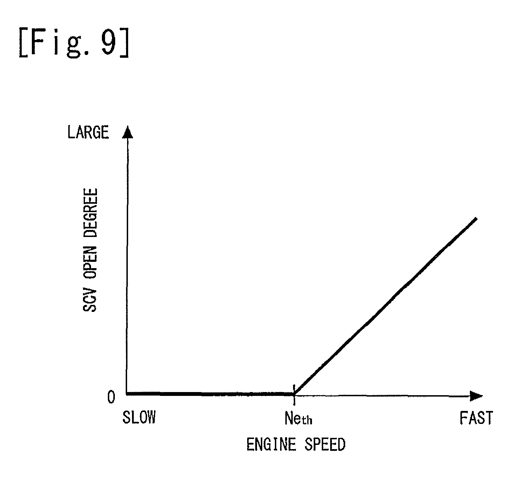

Next, embodiment 5 of the present invention will be described with reference to Figure 9. The present embodiment has a feature of executing SCV opening degree control that will be described hereinafter, in the same configuration as in embodiment 4.

### [Feature of embodiment 5]

As described in embodiment 4 described above, when the SCV 38 is brought into a closed state, the above described pressure difference can be made large, and a larger amount of condensed water can be generated in the condenser 30. However, when the SCV 38 is closed, generation of pump loss cannot be avoided, and the possibility of bringing about reduction in fuel efficiency cannot be denied. Therefore, in the present embodiment, the opening degree of the SCV 38 is controlled based on an engine speed (SCV opening degree control).

Figure 9 is a diagram explaining one example of the SCV opening degree control that is executed by the ECU 50. As shown in Figure 9, in the SCV opening degree control, the SCV 38 is brought into a closed state when the engine speed is a threshold value Neₜₕ or less. Further, when the engine speed exceeds the threshold value Neₜₕ, the opening degree of the SCV 38 is made large in response to the engine speed. Thereby, an effect similar to the effect of embodiment 1 described above can be obtained while increase in pump loss in a high rotation range is restrained.

Note that in embodiment 5 described above, the ECU 50 executes the SCV opening degree control, whereby the "working gas amount control means" in the above described eleventh invention is realized.

### Embodiment 6

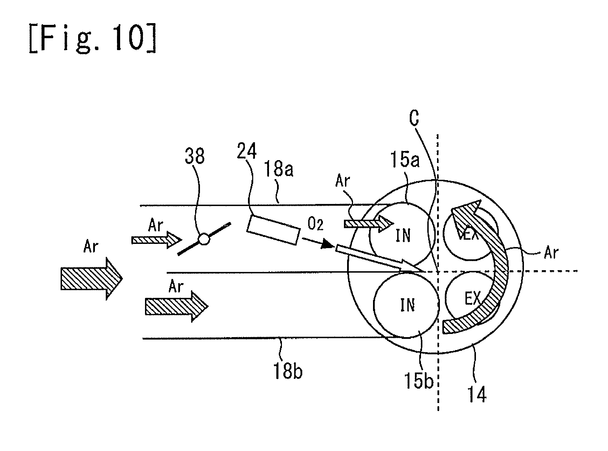

Next, embodiment 6 of the present invention will be described with reference to Figure 10. The present embodiment differs from embodiment 4 described above in that the disposition spot of the oxygen injector 24 is specified. Therefore, hereinafter, the difference will be mainly described, and explanation of the points common to embodiment 4 described above will be simplified or omitted.

### [Feature of embodiment 6]

Figure 10 is a diagram for describing a feature part of embodiment 6. As shown in Figure 10, the oxygen injector 24 is installed so that an injection port 24a thereof points toward a center C of the combustion chamber 14. Therefore, O₂ from the injection port 24a is injected toward the center C.

Figure 10 shows a case in which the SCV 38 is in an opened state. When the SCV 38 is in an opened state, a part of the working gas flowing in the connection passage 22 flows in the intake port 18a. In this regard, in the present embodiment, the injection port 24a is installed as described above, mixing of O₂ that is injected from the injection port 24a and the working gas that flows in the intake port 18a can be restrained. Consequently, a center layer with a high O₂ concentration can be formed in the center in the inner layer formed in the combustion chamber 14. Therefore, an effect similar to the effect of embodiment 1 described above can be obtained.

Note that in embodiment 6 described above, the injection port 24a corresponds to the "injection port" in the above described twelfth invention.

### Embodiment 7

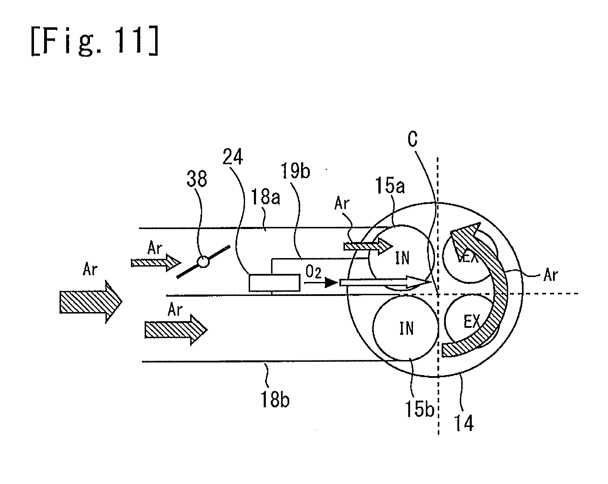

Next, embodiment 7 of the present invention will be described with reference to Figure 11. The present embodiment differs from embodiment 4 described above in that the disposition spot of the oxygen injector 24 is specified, similarly to embodiment 6 described above. Therefore, hereinafter, the difference will be mainly described, and explanation of the points common to embodiment 4 described above will be simplified or omitted.

### [Feature of embodiment 7]

Figure 11 is a diagram for describing a feature part of embodiment 7. As shown in Figure 11, the intake port 18 is configured by the intake port 18a and the intake port 18b. In the intake port 18a, a demarcation passage 19b that partially demarcates a part of the intake port 18b side is formed. The oxygen injector 24 is installed upstream of the demarcation passage 19b, and the injection port 24a thereof is installed so as to point toward a center C of the combustion chamber 14.

As described in embodiment 6 described above, when the SCV 38 is in an opened state, a part of the working gas flowing in the connection passage 22 flows in the intake port 18a. In this regard, in the present embodiment, the oxygen injector 24 is installed in the demarcation passage 19b, and therefore, mixing of O₂ from the oxygen injector 24 and the working gas that flows in the intake port 18a can be reliably prevented. Further, in the present embodiment, the injection port 24a is installed as described above. Accordingly, a center layer with an extremely high O₂ concentration can be formed in the center in the inner layer formed in the combustion chamber 14. Consequently, according to the present embodiment, the above described pressure difference can be made larger as compared with embodiment 6 described above, and therefore, a larger amount of condensation water can be generated in the condenser 30.

Note that in embodiment 7 described above, the demarcation passage 19b corresponds to the "demarcation channel" in the above described eighth invention.

### Embodiment 8

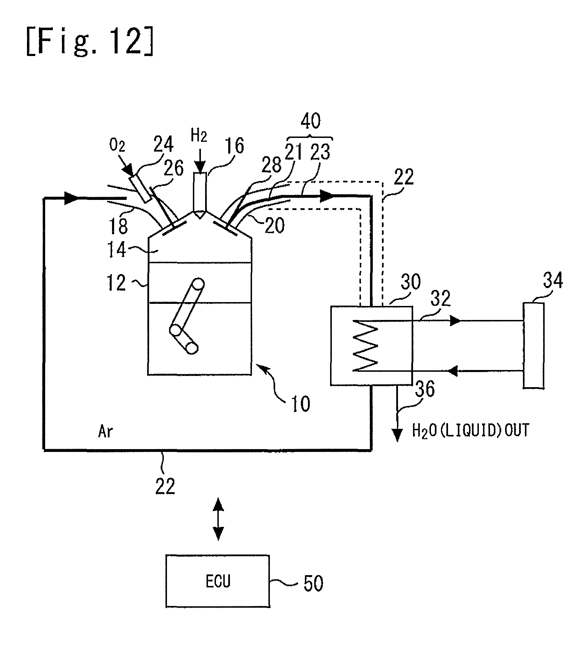

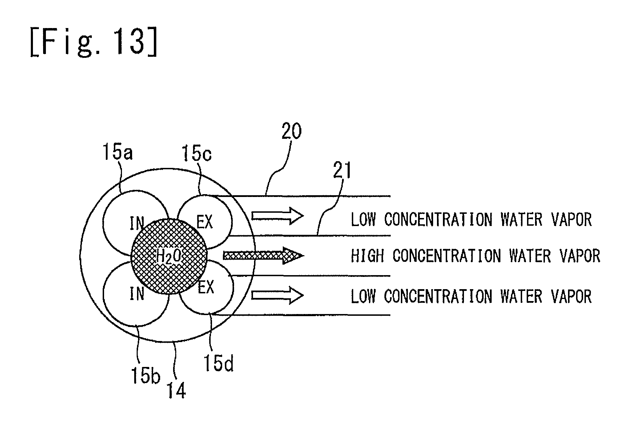

Next, embodiment 8 of the present invention will be described with reference to Figure 12 and Figure 13. The present embodiment differs from embodiment 1 described above in that a part of an exhaust path is demarcated. Namely, a configuration of an engine, a basic flow of the working gas, and a stratification operation are common to the engine of embodiment 1 described above. Therefore, hereinafter, the above described difference will be mainly described, and explanation of the points common to embodiment 1 described above will be simplified or omitted.

### [Feature of embodiment 8]

Figure 12 is a diagram for showing a configuration of a working gas circulation type engine of embodiment 8. As shown in Figure 12, the working gas circulation type engine of the present embodiment includes a high concentration water vapor channel 40 in an exhaust path from an exhaust port of the combustion chamber 14 to the condenser 30. Figure 13 is a diagram for describing the high concentration water vapor channel 40 in Figure 12. As shown in Figure 13, the exhaust port 20 is connected to both an exhaust port 14c and an exhaust port 14d of the combustion chamber 14. Further, a demarcation passage 21 that partially demarcates a central portion of the exhaust port 20 is formed in a center of the exhaust port 20. The demarcation passage 21 is connected to a demarcation passage 23 that partially demarcates a central portion of the connection passage 22. The high concentration water vapor channel 40 is configured by the demarcation passage 21 and the demarcation passage 23.

As described in embodiment 1 described above, when a stratification operation is executed, an inner layer with a high water vapor concentration and an outer layer with a low water vapor concentration can be formed in the combustion chamber 14. However, after discharge from the combustion chamber 14, the inner layer and the outer layer flow to the condenser 30 side while mixing with each other. Therefore, the water vapor partial pressure of the above described inner layer is likely to be reduced. In this regard, in the present embodiment, the high concentration water vapor channel 40 is formed as described above, and therefore, the inner layer with a high water vapor concentration is passed to the high concentration water vapor channel 40 and can be introduced into the condenser 30. Accordingly, a larger amount of condensed water can be generated in the condenser 30.

Note that in embodiment 8 described above, the high concentration water vapor channel 40 corresponds to the "high concentration water vapor channel" in the above described sixth invention.

### Embodiment 9

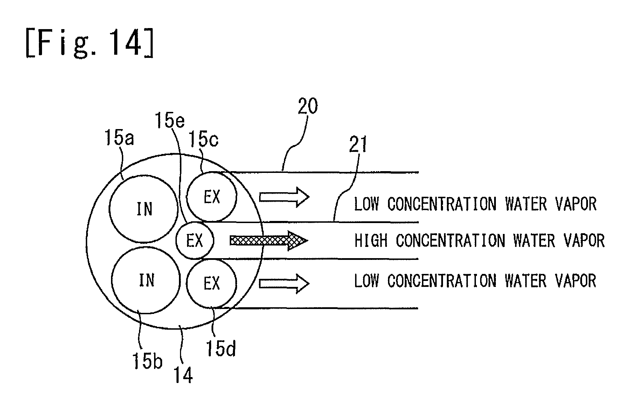

Next, embodiment 9 of the present invention will be described with reference to Figure 14. In embodiment 8 described above, the high concentration water vapor channel 40 is formed in the above described exhaust path. The present embodiment has a feature in which an intake port which is given a function similar to the function of the high concentration water vapor channel 40 is independently formed. Therefore, hereinafter, the above described feature will be mainly described, and for the other parts, the content of embodiment 8 described above will be properly cited.

### [Feature of embodiment 9]

Figure 14 is a diagram for describing a feature part of embodiment 9. As shown in Figure 14, the exhaust port 20 is configured by exhaust ports 20c to 20e that are respectively connected to exhaust ports 14c to 14e. The exhaust ports 20c and 20d merge with each other in downstream sides thereof, and the intake port after merging is connected to the connection passage 22. In contrast with this, the exhaust port 20e is directly connected to the condenser 30. Namely, the exhaust port 20e functions as an exclusive channel for the inner layer with a high water vapor concentration, similarly to the high concentration water vapor channel 40. Consequently, according to the present embodiment, an effect similar to the effect of embodiment 8 described above can be obtained.

Note that in embodiment 9 described above, the exhaust port 20e corresponds to the "high concentration water vapor channel" in the above described sixth invention.

### Embodiment 10

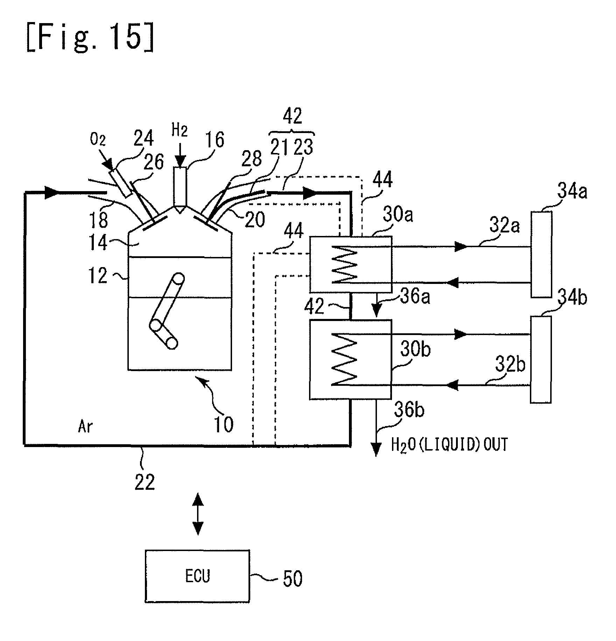

Next, embodiment 10 of the present invention will be described with reference to Figure 15. The present embodiment differs from embodiment 8 described above in that two condensers with different cooling water temperatures are disposed on the connection passage 22, and a branch channel that branches from the condenser at an upstream side out of the two condensers is provided. Therefore, hereinafter, the above described differences will be mainly described, and explanation of the points common to embodiment 8 described above will be simplified or omitted.

Figure 15 is a diagram for describing a feature part of embodiment 10. As shown in Figure 15, a working gas circulation type engine of the present embodiment includes condensers 30a and 30b on the connection passage 22. The condensers 30a and 30b include cooling water channels 32a and 32b for passing cooling water, in insides thereof. The cooling water channels 32a and 32b are connected to radiators 34a and 34b. The cooling water flowing in the cooling water channels 32a and 32b is cooled in the radiators 34a and 34b. Further, the condensers 30a and 30b include exhaust paths 36a and 36b that discharge condensed water to an outside.

Further, the working gas circulation type engine of the present embodiment includes a high concentration water vapor channel 42. The high concentration water vapor channel 42 is the same as the high concentration water vapor channel 40, except that the high concentration water vapor channel 42 is formed in the exhaust path from the exhaust port of the combustion chamber 14 to the condenser 30b. Namely, the high concentration water vapor channel 42 differs from the high concentration water vapor channel 40 the most downstream spot of which is the condenser 30 in that the most downstream spot is the condenser 30b. The inner layer with a high water vapor concentration that is formed in the combustion chamber 14 can be passed to the high concentration water vapor channel 42.

Further, the working gas circulation type engine of the present embodiment also includes a low concentration water vapor channel 44. The low concentration water vapor channel 44 configures a part of the exhaust passage between the exhaust port of the combustion chamber 14 and the exhaust passage at the downstream side from the condenser 30b. More specifically, the low concentration water vapor channel 44 is configured by a part other than the high concentration water vapor channel 42, of the exhaust passage from the exhaust port of the combustion chamber 14 to the condenser 30a, and a part that connects the connection passage 22 at a downstream side from the condenser 30b and the condenser 30a. The outer layer with a high water vapor concentration that is formed in the combustion chamber 14 can be passed to the low concentration water vapor channel 44.

If the outer layer with a low water vapor concentration can be passed to the low concentration water vapor channel 44, the outer layer can be introduced to only the condenser 30a. In the outer layer with a low water vapor concentration, an absolute amount of water vapor that can be liquefied is small. Therefore, if the outer layer can be introduced into only the condenser 30a, a constant amount of condensed water can be ensured even if the temperature of the cooling water that flows in the condenser 30a is a slightly higher temperature. Accordingly, the condenser 30a can be downsized. Note that since the inner layer with a low water vapor concentration is passed to the high concentration water vapor channel 42, the temperature of the cooling water that flows in the condenser 30b has to be set at a low temperature.

Incidentally, while in embodiment 10 described above, both the condensers 30a and 30b are provided on the high concentration water vapor channel 42, the condenser 30a does not have to be provided. This is because if the condenser 30b with a low cooling water temperature is provided on the high concentration water vapor channel 42, the water vapor in the above described inner layer can be sufficiently liquefied in the condenser 30b. Namely, with the configuration of the exhaust path in which the condenser 30b with a high cooling water temperature is provided on the high concentration water vapor channel 42, and the condenser 30a with a low cooling water temperature is provided on the low concentration water vapor channel 44, an effect similar to the effect of embodiment 10 described above can be obtained.

Note that in embodiment 10 described above, the condenser 30b corresponds to the "first condensed water generating means" in the above described seventh invention, the condenser 30a corresponds to the "second condensed water generating means" in the above described seventh invention, the high concentration water vapor channel 42 corresponds to the "high concentration water vapor channel" in the above described seventh invention, and the low concentration water vapor channel 44 corresponds to the "low concentration water vapor channel" in the above described seventh invention, respectively.

### Embodiment 11

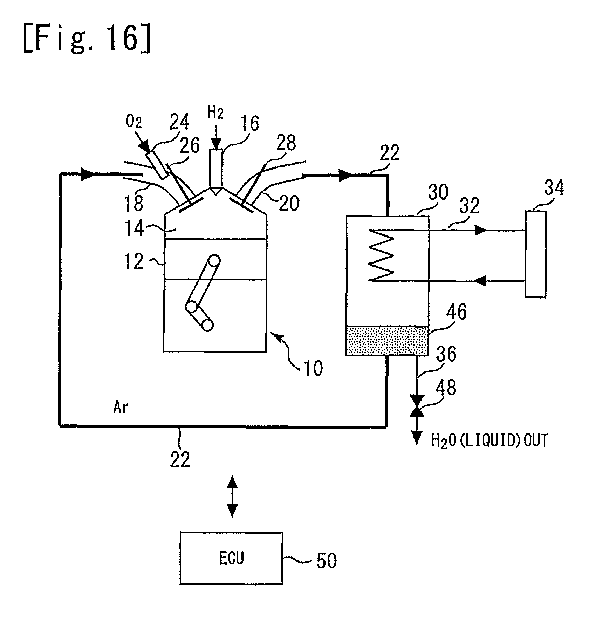

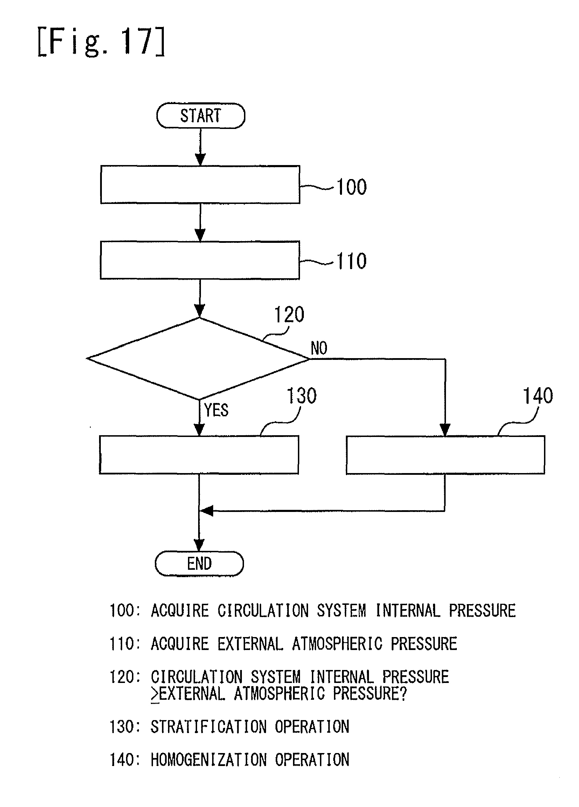

Next, embodiment 11 of the present invention will be described with reference to Figure 16 and Figure 17. The present embodiment differs from embodiment 1 described above in that in an engine configuration capable of controlling drain from the condenser 30, operation switch control that will be described later is executed. Therefore, hereinafter, the difference will be mainly described, and explanation of the points common to embodiment 1 described above will be simplified or omitted.

Figure 16 is a diagram showing a configuration of a working gas circulation type engine of embodiment 11. As shown in Figure 16, the working gas circulation type engine of the present embodiment includes a condensed water tank 46 and a drain valve 48. The condensed water tank 46 is a tank for temporarily storing condensed water generated in the condenser 30. The drain valve 48 is connected to the condensed water tank 46 and the ECU 50, and is configured to discharge condensed water in the condensed water tank 46 to an outside by an opening degree of the drain valve 48 being controlled by the ECU 50.

A purpose of loading the condensed water tank 46 and the drain valve 48 is to prevent external air from flowing into the connection passage 22. If a pressure in the condensed water tank 46 is an external pressure (for example, atmospheric pressure) or more, the condensed water generated in the condenser 30 can be discharged to an outside without a problem. However, if the pressure in the condensed water tank 46 is lower than the external pressure, the external air flows into the condenser 30 and enters the connection passage 22. In particular, the temperature of the working gas lowers after the engine stops, and therefore, the pressure in the connection passage 22 and the condensed water tank 46 (hereinafter, called an "circulation system internal pressure") is easily reduced. Therefore, if the drain valve 48 is opened abruptly after restart of the engine, the aforementioned inflow of the external air occurs. Therefore, it is desirable that while the circulation system internal pressure is lower than the external pressure, the condensed water is stored in the condensed water tank 46, and if the circulation system internal pressure becomes the external pressure or higher, the drain valve 48 is opened to discharge the condensed water to an outside.

In the configuration as above, in the present embodiment, when the circulation system internal pressure is lower than the external atmospheric pressure, the stratification operation is temporarily intermitted, and homogenization operation is executed (operation switch control). The homogenization operation substantially homogenizes the O₂ concentration distribution in the combustion chamber 14 as described in embodiment 1 described above. Therefore, as compared with the case of the stratification operation that makes the O₂ concentration distribution inhomogeneous, the working gas temperature can be increased in a shorter time period. Therefore, if the homogenization operation is executed by the operation switch control, the circulation system internal pressure can be increased in a shorter time period. In addition, the amount of the condensed water to be stored can be small, and therefore the condensed water tank 46 can be downsized.

With reference to Figure 17, specific processing of the operation switch control mentioned above will be described. Figure 17 is a flowchart of an operation switch control routine that is executed by the ECU 50 in embodiment 11. The present routine is regularly executed repeatedly during an engine operation. In the routine shown in Figure 17, the circulation system internal pressure and an external atmospheric pressure are acquired first (steps 100 and 110). Subsequently, in step 120, the circulation system internal pressure and the external atmospheric pressure that are acquired are compared. When the circulation system internal pressure is the external atmospheric pressure or higher, the stratification operation is executed after the drain valve 48 is opened (step 130). In contrast with this, when the circulation system internal pressure is lower than the external atmospheric pressure, the homogenization operation is executed after the drain valve 48 is closed (step 140). Consequently, according to the routine shown in Figure 17, the circulation system internal pressure can be increased early.

Note that in embodiment 11 described above, the condenser 30 corresponds to the "condensed water generating means" in the above described fourth and fifth inventions, the condensed water tank 46 corresponds to the "condensed water storing means" in the above described fourth and fifth inventions, and the drain valve 48 corresponds to the "condensed water discharging means" in the above described fourth and fifth inventions, respectively.

Further, in embodiment 11 described above, the ECU 50 executes the processing in step 120 of Figure 17, whereby the "pressure comparing means" in the above described fourth and fifth inventions is realized, the ECU 50 executes the processing in step 140 of Figure 17, whereby the "water drain prohibiting means" in the invention of the above described fourth invention is realized, and the ECU 50 executes the processing in steps 130 and 140 in Figure 17, whereby the "operation switching means" in the above described fifth invention is realized.

### Description of Reference Numerals

- 10: engine main body
- 12: piston
- 14: combustion chamber
- 14a, 14b: inlet port
- 14c, 14d, 14e: exhaust port
- 16: hydrogen injector
- 18, 18a, 18b: intake port
- 20, 20c, 20d, 20e: exhaust port
- 22: connection passage
- 24: oxygen injector
- 24a: injection port
- 26: intake valve
- 28: exhaust valve
- 30, 30a, 30b: condenser
- 32, 32a, 32b: cooling water channel
- 34, 34a, 34b: radiator
- 36, 36a, 36b: exhaust path
- 38: swirl control valve
- 40, 42: high concentration water vapor channel
- 44: low concentration water vapor channel
- 46: condensed water tank
- 48: drain valve
- 50: ECU

## Claims

1. A working gas circulation type engine, comprising:
a circulation path in which a working gas circulates;
a combustion chamber that is provided in the circulation path, allows a reaction that generates water vapor by combustion of an oxidant and fuel to proceed, and allows the working gas which is taken in from the circulation path to expand in conjunction with the reaction to discharge the working gas to the circulation path;
stratification operation executing means for executing a stratification operation of forming a layer of a reactant and a layer of the working gas in the combustion chamber; and
water vapor separating and removing means that is provided in the circulation path, and separates and removes water vapor from the working gas which flows in the circulation path.

2. A working gas circulation type engine, comprising:
a circulation path in which a working gas circulates;
a combustion chamber that is provided in the circulation path, allows a reaction that generates water vapor by combustion of an oxidant and fuel to proceed, and allows the working gas which is taken in from the circulation path to expand in conjunction with the reaction to discharge the working gas to the circulation path;
stratification operation executing means for executing a stratification operation of forming an inner layer comprising a reactant and an outer layer comprising the working gas in the combustion chamber; and
water vapor separating and removing means that is provided in the circulation path, and separates and removes water vapor from the working gas that flows in the circulation path.

3. The working gas circulation type engine according to claim 2,
wherein the stratification operation executing means comprises:
inlet port opening and closing means for opening and closing an inlet port of the combustion chamber;
reactant supply means provided in the circulation path in a vicinity of the inlet port and for supplying the reactant to the combustion chamber; and
control means for controlling the inlet port opening and closing means and the reactant supply means so that the reactant flows in a vicinity of a center of the combustion chamber during opening of the inlet port.

4. The working gas circulation type engine according to claim 2 or 3,
wherein the water vapor separating and removing means comprises
condensed water generating means for cooling and liquefying water vapor,
condensed water storing means for storing condensed water generated in the condensed water generating means, and
condensed water discharging means for discharging condensed water in the condensed water storing means to an outside,
the working gas circulation type engine, further comprising:
pressure comparing means for comparing a pressure in the circulation path and an external pressure; and
water drain prohibiting means for prohibiting water drain from the condensed water discharging means when the pressure in the circulation path is lower than the external pressure.

5. The working gas circulation type engine according to any one of claims 2 to 4,
wherein the water vapor separating and removing means comprises
condensed water generating means for cooling and liquefying water vapor,
condensed water storing means for storing condensed water generated in the condensed water generating means, and
condensed water discharging means for discharging the condensed water in the condensed water storing means to an outside,
the working gas circulation type engine, further comprising:
homogenization operation executing means for executing a homogenization operation of forming a homogenized mixture gas of the reactant and the working gas in the combustion chamber;
pressure comparing means for comparing a pressure in the circulation path and an external pressure; and
operation switching means for executing the stratification operation by the stratifying means when the pressure in the circulation path is higher than the external pressure, and executing a homogenization operation by the homogenizing means when the pressure in the circulation path is the external pressure or lower.

6. The working gas circulation type engine according to any one of claims 2 to 5, further comprising:
a high concentration water vapor channel that is independently formed in the circulation path between the water vapor separating and removing means and the combustion chamber, and has an end thereof at a combustion chamber side opened toward a center portion of an exhaust port of the combustion chamber.

7. The working gas circulation type engine according to any one of claims 2 to 6,
wherein the water vapor separating and removing means comprises
first condensed water generating means for cooling and liquefying water vapor by a refrigerant, and
second condensed water generating means for cooling and liquefying water vapor by a refrigerant with a temperature higher than the refrigerant for use in the first condensed water generating means, and
wherein the first condensed water generating means is connected to a high concentration water vapor channel that is independently formed in the circulation path between the water vapor separating and removing means and the combustion chamber, and has an end thereof at a combustion chamber side opened toward a center portion of an exhaust port of the combustion chamber, and
the second condensed water generating means is connected to a low concentration water vapor channel as a channel except for the high concentration water vapor channel, in the circulation path between the water vapor separating and removing means and the combustion chamber.

8. The working gas circulation type engine according to any one of claims 3 to 7,
wherein in the circulation path in a vicinity of the inlet port, a demarcation channel that demarcates a part thereof is formed, and
the reactant supply means is provided in the demarcation channel.

9. The working gas circulation type engine according to any one of claims 3 to 8,
wherein the circulation path branches into a first path and a second path in a vicinity of the inlet port, and
the reactant supply means is provided in the first path, and the second path is configured to be able to form a swirl flow in a working gas flow that flows in the combustion chamber.

10. The working gas circulation type engine according to claim 9, further comprising:
working gas amount regulating means provided at an upstream side from the reactant supply means in the first path, and capable of regulating an amount of the working gas which flows in the first path.

11. The working gas circulation type engine according to claim 10, further comprising:
working gas amount controlling means for controlling the working gas amount regulating means so that the amount of the working gas increases in response to an engine speed when the engine speed exceeds a set value.

12. The working gas circulation type engine according to any one of claims 3 to 11,
wherein the reactant supply means comprises an injection port for injecting a reactant, and
the reactant supply means is provided so that the injection port points toward a center of the combustion chamber.
